# EUROPÄISCHE PATENTANMELDUNG

(11) **EP 1 580 537 A1**
(43) Veröffentlichungstag der Anmeldung: **28.09.2005**
(21) Anmeldenummer: 04007102.9
(22) Anmeldetag: 24.03.2004
(51) Int. Cl.: G01F 1/68, G01F 1/69, F01D 5/18

(54) **Verfahren und Vorrichtung zur Detektierung von Störungen des Kühlluftsystems einer Turbine**

(71) Anmelder: SIEMENS AKTIENGESELLSCHAFT, 80333 München (DE)
(72) Erfinder: Feldhege, Martin, 12203 Berlin (DE); Stamm, Werner, Dr., 45481 Mülheim (DE)

(57) **Zusammenfassung**

Bei einem erfindungsgemäßen Verfahren und einer Vorrichtung (1) zur Detektierung von Störungen des Kühlluftsystems einer Turbine wird zumindest für einige Turbinenschaufeln (3) deren jeweiliger Kühlluftverbrauch mittels einer Messvorrichtung (5) ermittelt, wobei diese Messvorrichtung (5) insbesondere einen Sensordraht (9) mit mindestens einer temperaturabhängigen Eigenschaft umfasst.

Störungen des Kühlluftsystems äußern sich in einem Ansteigen der Temperatur, welche über eine Erfassung der temperaturabhängigen Eigenschaft des Sensordrahts (9) detektiert werden kann.

## Beschreibung

Die Erfindung betrifft ein Verfahren sowie eine Vorrichtung zur Detektierung von Störungen des Kühlluftsystems einer Turbine, insbesondere von Verstopfungen eines Kühlluftkanals.

Während des Betriebs einer Turbine, beispielsweise einer Gasturbine, sind zahlreiche Bauteile der Turbine einer hohen Temperaturbelastung ausgesetzt. Das Antriebsmedium für die Turbine, beispielsweise Heißgas, verrichtet Arbeit an den Turbinenschaufeln, so dass diese in Rotation versetzt werden und Rotationsenergie an einen an die Turbine gekoppelten Generator zur Erzeugung von elektrischer Energie abgeben können.

Der Heißgasstrom kann dabei zu einer Korrosionsgefährdung der mit dem Heißgasstrom in Kontakt kommenden Turbinenbauteile führen. Weiterhin sind diese Turbinenbauteile einer oxidierenden Atmosphäre ausgesetzt. Schließlich stellen die sehr hohen Temperaturen des Heißgases an sich eine Gefährdung der damit in Kontakt tretenden Turbinenbauteile, insbesondere der Turbinenschaufeln, dar, weil die dabei auftretenden Temperaturspannungen eine extreme Belastung für die Turbinenschaufeln darstellen.

Um die geschilderten Belastungen zu reduzieren, ist es bekannt, die betroffenen Turbinenbauteile mit Kühlluftkanälen auszustatten, so dass diese Bauteile mittels zugeführter Kühlluft abgekühlt werden können, um die Gefährdung durch extreme Temperaturen herabzusetzen.

Die dabei im Zusammenhang mit dem Kühlluftkanal verwendeten Kühlluftbohrungen zum Ein- und/oder Austritt der Kühlluft können jedoch während des Betriebs in Folge von Partikeln im Kühlluftstrom verstopfen. Dies kann dann zu lokalen Überhitzungen der betroffenen Turbinenbauteile und im Extremfall zur Zerstörung dieser Bauteile führen; insbesondere betroffen sind hiervon die Turbinenschaufeln.

Um eine Verstopfung eines Kühlluftkanals festzustellen, ist es bekannt, den Gesamtkühlluftverbrauch der Turbine zu messen. Jedoch ist diese Messung nicht aussagekräftig in Bezug auf einen spezifischen Ort, an welchem eine Störung aufgetreten ist.

Der Erfindung liegt daher die Aufgabe zugrunde, ein verbessertes Verfahren sowie eine Vorrichtung zur Detektierung von Störungen des Kühlluftsystems einer Turbine anzugeben, mittels welcher insbesondere der Störungsort gezielt auffindbar ist.

Des weiteren sollen ein erfindungsgemäßes Verfahren sowie eine erfindungsgemäße Vorrichtung ein schnelles Erkennen einer derartigen Störung erlauben.

Bezüglich des Verfahrens wird die Aufgabe erfindungsgemäß gelöst durch ein Verfahren zur Detektierung von Störungen des Kühlluftsystems einer Turbine, wobei zumindest für eine Teilmenge an Turbinenschaufeln jeweils ein Kühlluftverbrauch bezüglich jeder dieser Turbinenschaufeln ermittelt wird.

Die Erfindung geht dabei von der Überlegung aus, dass zur Ermittlung eines spezifischen Störungsorts lokale Messgrößen herangezogen werden müssen. Da bei einer Turbine jede Turbinenschaufel einer extremen Temperaturbelastung ausgesetzt ist und deshalb üblicherweise gekühlt werden muss, ist es bei der vorliegenden Erfindung vorgesehen, zumindest für eine Anzahl an Turbinenschaufeln für jede dieser Turbinenschaufeln aus der Anzahl der Turbinenschaufeln jeweils den auftretenden Kühlluftverbrauch zu ermitteln. Ein sinkender Kühlluftverbrauch/Kühlluftdurchsatz einer Turbinenschaufel ist dann ein sicheres Indiz dafür, dass die Kühlluftzufuhr zu dieser Turbinenschaufel gestört ist und eine Gefährdung dieser Turbinenschaufel vorliegt.

Bevorzugt wird der Kühlluftverbrauch dabei mittels einer Messvorrichtung ermittelt, welche in einem Kühlluftkanal der jeweiligen Turbinenschaufel angeordnet ist.

Dabei wird als Ort der Anordnung der Messvorrichtung das bereits vorhandene Kühlluftsystem umfassend einen Kühlluftkanal der Turbinenschaufel verwendet. So ist es nicht erforderlich, zum Anbringen der Messvorrichtung an die Kühlschaufel eine separate Aufnahme für die Messvorrichtung vorzusehen.

In einer besonders bevorzugten Ausführungsform umfasst die Messvorrichtung mindestens einen Sensordraht, welcher mindestens eine temperaturabhängige Eigenschaft aufweist.

Der Sensordraht wird dabei beispielsweise an einer definierten Stelle in einem Kühlluftkanal des Turbinenschaufelfußes angebracht. Wird nun die Turbinenschaufel in Folge eines Kontakts mit Heißgas einer hohen Temperatur ausgesetzt, so verändert sich mit variierender Temperatur insbesondere der elektrische Widerstand des Sensordrahts.

Diese temperaturabhängige Eigenschaft kann leicht ermittelt werden und in Beziehung zur Temperatur gebracht werden, welcher die Turbinenschaufel ausgesetzt ist.

Ein Unter- bzw. ein Überschreiten eines vorgegebenen Widerstandswert ist dann ein Indiz dafür, dass eine gewünschte maximale Beaufschlagungstemperatur der betroffenen Turbinenschaufel überschritten ist und gegebenenfalls mit einer Störung des Kühlluftsystems im Hinblick auf diese Turbinenschaufel zu rechnen ist. Dabei kann es auch ausreichend sein, die relative Änderung des Widerstands zu ermitteln und die relative Änderung des Kühlluftstroms in Bezug zu einer Absolutwertmessung des Durchflusses zu setzen.

Zur Detektierung der temperaturabhängigen Eigenschaft des Sensordrahts wird dieser bevorzugt mit einem Konstantstrom beaufschlagt.

Wenn sich während des Betriebs der Turbine die auf die betrachtete Turbinenschaufel einwirkende Temperatur verändert, so ist dies bei dieser Ausführungsform dadurch feststellbar, dass sich in Folge des am Sensordraht anliegenden Konstantstroms dessen Spannungsabfall verändert. Dieser Spannungsabfall kann sehr leicht mittels einer mit dem Sensordraht verbundenen Messschaltung detektiert werden.

Die temperaturabhängige Eigenschaft ist daher bevorzugt eine elektrische Spannung, welche über mindestens einen Teilbereich des Sensordrahts abfällt.

Wie bereits erwähnt, kann ein derartiger Spannungsabfall sehr leicht mittels einer einfachen Messschaltung detektiert werden. Im Vergleich zur Detektierung einer Widerstandsänderung ist die Ermittlung eines Spannungsabfalls und dessen Quantifizierung sehr viel einfacher in messtechnischer Hinsicht.

Besonders bevorzugt wird die Spannung dabei mittels einer sogenannten Vierpunktmessung ermittelt.

Bei einer Vierpunktmessung fallen die Kontaktwiderstände der verwendeten Messelektroden nicht ins Gewicht, da hierbei der Strom durch zwei Kontakte geführt und über zwei weitere Kontakte die Spannung gemessen wird. Die Kontaktwiderstände der Elektroden, mittels welcher der Strom eingeprägt wird, spielen bei einer derartigen Messung überhaupt keine Rolle, da der gemessene, eingeprägte Strom auch im Sensordraht fließen muss. Die Kontaktwiderstände bei der dabei verwendeten Spannungsmessung liegen zusammen mit dem Innenwiderstand des verwendeten Spannungsmesssystems parallel zu dem Widerstand des Sensordrahts zwischen diesen Kontakten. Da die Innenwiderstände von Spannungsmessern in der Regel sehr hoch sind, fallen deren Kontaktwiderstände nicht ins Gewicht und die Spannung zwischen den Kontakten fällt fast vollständig über dem Spannungsmesser ab.

In einer weiteren bevorzugten Ausführungsform wird die temperaturabhängige Eigenschaft mittels einer softwarebasierten Recheneinheit ausgewertet.

Dabei wird die temperaturabhängige Eigenschaft des Sensordrahts analog erfasst und anschließend zur Weiterverarbeitung in der Recheneinheit digitalisiert.

Eine derartige Weiterverarbeitung hat insbesondere den Vorteil, dass der digitalisierte Wert programmtechnisch dazu benutzt werden kann, eine Reihe von weiteren Aktionen auszulösen, beispielsweise die Ausgabe einer Warnmeldung und eines Warnsignals mittels einer leittechnischen Einrichtung.

Bevorzugt arbeitet die Messvorrichtung nach dem Prinzip des aus dem Stand der Technik bekannten Hitzdraht-Anemometers.

Weiterhin besteht der Sensordraht aus einem hochtemperaturfestem Material, beispielsweise Kantal und/oder Invar, um eine hohe Lebensdauer der Messvorrichtung sicherzustellen.

Bezüglich der Vorrichtung wird die Aufgabe erfindungsgemäß gelöst durch eine Vorrichtung zur Detektierung von Störungen des Kühlluftsystems einer Turbine mit mindestens einem Sensordraht, welcher mindestens eine temperaturabhängige Eigenschaft aufweist und in einem Kühlluftkanal einer Turbinenschaufel angeordnet ist.

Bevorzugt ist der Sensordraht mit einem Konstantstrom beaufschlagbar.

In einer weiteren bevorzugten Ausführungsform ist die temperaturabhängige Eigenschaft eine elektrische Spannung, welche über mindestens einen Teilbereich des Sensordrahtes abfällt.

Weiterhin ist es vorteilhaft, wenn die Spannung mittels einer Vierpunktmessung ermittelbar ist.

Des weiteren umfasst die Vorrichtung vorteilhaft eine softwarebasierte Recheneinheit, mittels welcher die temperaturabhängige Eigenschaft auswertbar ist.

Die Vorrichtung arbeitet ferner bevorzugt nach dem Prinzip des Hitzdraht-Anemometers.

In einer besonders bevorzugten Ausführungsform besteht der Sensordraht aus einem hochtemperaturfesten Material, insbesondere aus Kantal und/oder Invar.

Im folgenden wird ein Ausführungsbeispiel der Erfindung näher dargestellt. Es zeigt:
FIG eine erfindungsgemäße Vorrichtung in schematischer Darstellung.

In der FIG ist eine erfindungsgemäße Vorrichtung 1 zur Detektierung von Störungen des Kühlluftsystems einer Turbine dargestellt.

Während des Betriebs einer Turbine sind insbesondere die Turbinenschaufeln 3 einer hohen Temperaturbelastung ausgesetzt.

Deshalb sind derartige Turbinenschaufeln 3 mit einem oder mehreren Kühlluftkanälen 7 versehen, in welche Kühlluft eingeleitet wird. Zum Abführen der Kühlluft können Kühlluftauslassöffnungen 11 vorgesehen sein.

Eine sichere Kühlung der Turbinenschaufeln 3 ist nicht mehr gewährleistet, wenn ein oder mehrere der Kühlluftkanäle 7 verstopft sind. Dies kann beispielsweise durch im Heißgasstrom befindliche Partikel geschehen.

Ebenso können sich die Kühlluftauslassöffnungen 11 mit Partikeln zusetzen, so dass die Kühlluftströmung durch die Turbinenschaufel verhindert oder verringert wird.

Die Folge einer mangelnden Kühlung der Turbinenschaufeln 3 zeigen sich insbesondere in einer steigenden Temperaturbelastung der betroffenen Turbinenschaufel 3.

Um derartige Störungen des Kühlluftsystems detektieren zu können, ist ein Sensordraht 9 vorgesehen, welcher in mindestens einem Kühlluftkanal 7 der Turbinenschaufel 3 angeordnet ist.

Dieser Sensordraht 9 weist mindestens eine temperaturabhängige Eigenschaft aus, insbesondere einen temperaturveränderlichen Widerstand.

Der Sensordraht 9 wird von einer Konstantstromquelle 13 gespeist.

Ein Maß für die im Kühlluftkanal 7 vorherrschende Temperatur ist eine elektrische Spannung, welche über einen Teilbereich 17 oder auch über die gesamte Länge des Sensordrahts 9 abfällt und mittels einer Spannungsmessung 15 erfasst werden kann.

Die gemessene Spannung ist dann ein Maß für die im Kühlluftkanal 7 herrschende Temperatur.

Eine Messvorrichtung 5 umfassend den Sensordraht 9, die Konstantstromquelle 13 und die Spannungsmessung 15 kann in einem, in mehreren oder in allen Kühlluftkanälen 7 der Turbinenschaufel 3 angeordnet sein.

Um eine Turbinenschaufel bezogene Ermittlung einer Störung der Kühlluftzufuhr detektieren zu können, müssen zumindest diejenigen Turbinenschaufeln 3 aus der Gesamtanzahl der Turbinenschaufeln der Turbine mit mindestens je einer Messvorrichtung 5 versehen sein, für welche eine ortsbezogene Aussage über eine Störung gewünscht ist. Beispielsweise können diejenigen Turbinenschaufeln 3 mit je einer Messvorrichtung 5 versehen werden, die den größten Temperaturbelastungen ausgesetzt sind. Es können jedoch auch andere oder auch alle Turbinenschaufeln mit einer Messvorrichtung 5 versehen werden.

Die Messvorrichtung 5 kann auch als Luftmengensensor aufgefasst werden, da je nach Massenstrom der durch den Kühlluftkanal 7 strömenden Kühlluft ein bestimmter Widerstandswert bzw. eine bestimmte elektrische Spannung am Sensordraht 9 detektierbar ist. Deshalb gibt die am Sensordraht 9 abfallende Spannung bzw. der aktuelle Widerstandswert des Sensordrahts 9 auch Aufschluss über den Kühlluftverbrauch der Turbinenschaufel 3.

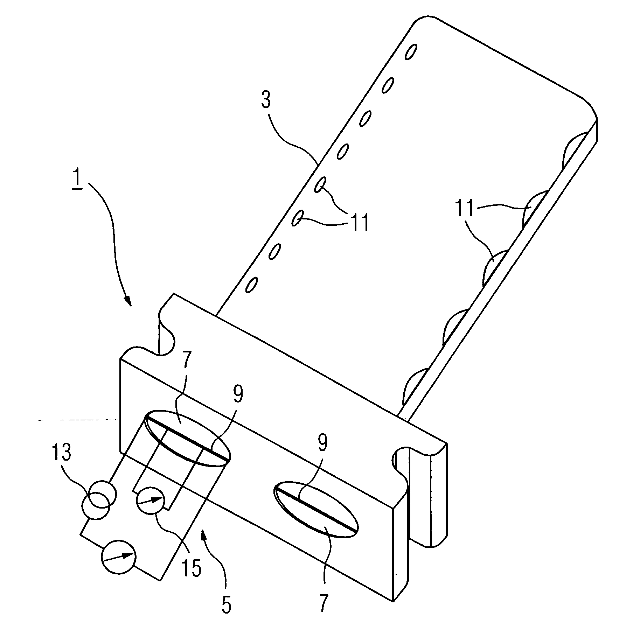

## Patentansprüche

1. Verfahren zur Detektierung von Störungen des Kühlluftsystems einer Turbine, **dadurch gekennzeichnet, dass** zumindest für eine Teilmenge an Turbinenschaufeln (3) jeweils ein Kühlluftverbrauch bezüglich jeder dieser Turbinenschaufeln (3) ermittelt wird.

2. Verfahren nach Anspruch 1,
**dadurch gekennzeichnet, dass** der Kühlluftverbrauch mittels einer Messvorrichtung (5) ermittelt wird, welche in einem Kühlluftkanal (7) der jeweiligen Turbinenschaufel angeordnet ist.

3. Verfahren nach Anspruch 2,
**dadurch gekennzeichnet, dass** die Messvorrichtung (5) mindestens einen Sensordraht (9) umfasst, welcher mindestens eine temperaturabhängige Eigenschaft aufweist.

4. Verfahren nach Anspruch 3,
**dadurch gekennzeichnet, dass** der Sensordraht (9) mit einem Konstantstrom (13) beaufschlagt wird.

5. Verfahren nach Anspruch 3 oder 4,
**dadurch gekennzeichnet, dass** die temperaturabhängige Eigenschaft eine elektrische Spannung (15) ist, welche über mindestens einen Teilbereich (17) des Sensordrahtes (9) abfällt.

6. Verfahren nach Anspruch 5,
**dadurch gekennzeichnet, dass** die Spannung (15) mittels einer Vierpunktmessung ermittelt wird.

7. Verfahren nach einem der Ansprüche 3 bis 6,
**dadurch gekennzeichnet, dass** die temperaturabhängige Eigenschaft mittels einer softwarebasierten Recheneinheit ausgewertet wird.

8. Verfahren nach einem der Ansprüche 3 bis 7,
**dadurch gekennzeichnet, dass** die Messvorrichtung (5) nach dem Prinzip des Hitzdraht-Anemometers arbeitet.

9. Verfahren nach einem der Ansprüche 3 bis 8,
**dadurch gekennzeichnet, dass**
der Sensordraht (9) aus einem hochtemperaturfesten Material besteht.

10. Verfahren nach Anspruch 9,
**dadurch gekennzeichnet, dass** das hochtemperaturfeste Material Kantal und/oder Invar umfasst.

11. Vorrichtung (1) zur Detektierung von Störungen des Kühlluftsystems einer Turbine, **gekennzeichnet durch** mindestens einen Sensordraht (9), welcher mindestens eine temperaturabhängige Eigenschaft aufweist und in einem Kühlluftkanal (7) einer Turbinenschaufel (3) angeordnet ist.

12. Vorrichtung (1) nach Anspruch 11,
**dadurch gekennzeichnet, dass** der Sensordraht (9) mit einem Konstantstrom (13) beaufschlagbar ist.

13. Vorrichtung (1) nach einem der Ansprüche 11 oder 12,
**dadurch gekennzeichnet, dass** die temperaturabhängige Eigenschaft eine elektrische Spannung (15) ist, welche über mindestens einen Teilbereich (17) des Sensordrahtes (9) abfällt.

14. Vorrichtung (1) nach Anspruch 13,
**dadurch gekennzeichnet, dass** die Spannung (15) mittels einer Vierpunktmessung ermittelbar ist.

15. Vorrichtung (1) nach einem der Ansprüche 11 bis 14,
**gekennzeichnet durch** eine softwarebasierte Recheneinheit, mittels welcher die temperaturabhängige Eigenschaft auswertbar ist.

16. Vorrichtung (1) nach einem der Ansprüche 11 bis 15,
**dadurch gekennzeichnet, dass** die Vorrichtung (1) nach dem Prinzip des Hitzdraht-Anemometers arbeitet.

17. Vorrichtung (1) nach einem der Ansprüche 11 bis 16,
**dadurch gekennzeichnet, dass** der Sensordraht (9) aus einem hochtemperaturfesten Material besteht.

18. Vorrichtung (1) nach Anspruch 17,
**dadurch gekennzeichnet, dass** das hochtemperaturfeste Material Kantal und/oder Invar umfasst.
